# EUROPEAN PATENT SPECIFICATION

(11) **EP 2 605 498 B1**
(45) Date of publication and mention of the grant of the patent: **18.01.2017**
(21) Application number: 12196854.9
(22) Date of filing: 13.12.2012
(51) Int. Cl.: H04M 1/725, H04M 1/60

(54) **Earphone connection detecting system and mobile device for supporting the system**
Kopfhöreranschlusserkennungssystem und mobile Vorrichtung zur Unterstützung des Systems
Système de détection de connexion d'écouteur et dispositif mobile pour supporter le système

(30) Priority: 13.12.2011 KR 20110133617
(43) Date of publication of application: 19.06.2013
(73) Proprietor: Samsung Electronics Co., Ltd, Gyeonggi-do 443-742 (KR)
(72) Inventor: Sagong, Jin, 443-742 Gyeonggi-do, (KR); Kim, Harksang, 443-742 Gyeonggi-do, (KR); Kim, Sangeun, 443-742 Gyeonggi-do, (KR); Kim, Taegyun, 443-742 Gyeonggi-do, (KR); Sim, Jaeyong, 443-742 Gyeonggi-do, (KR); An, Taeyoon, 443-742 Gyeonggi-do, (KR)
(74) Representative: Birchenough, Lewis

(56) References cited:
- GB-A- 2 330 276
- US-A1- 2007 049 103
- US-A1- 2009 061 694
- US-A1- 2011 237 131

## Description

### BACKGROUND OF THE INVENTION

### 1. Field of the Invention:

The present invention relates generally to a system that can correctly detect the connection of an earphone to a device (e.g. mobile device), without generating noise (e.g. audible noise output by the earphone). More particularly, although not exclusively, the present invention relates to a mobile device supporting such an earphone connection detecting system.

### 2. Description of the Related Art:

Mobile devices are widely used because they can be easily carried. For example, most people in the Republic of Korea and many other parts of the world use mobile devices since the devices allow users to make a voice call while they are moving. Such mobile devices of the related art are typically equipped with various types of functions in addition to the function of communicating voice call information between a caller and a called party. For example, a mobile device of the related art may include a file playback function, such as an MP3 player, and an image collecting function, such as a digital camera. A mobile device may also support functions for playing a mobile game or an arcade game, etc. A mobile device is typically equipped with earphone systems that allow the mobile device user to hear sounds (audio) generated by the mobile device more clearly, or to prevent the sounds from being heard by others. Therefore, mobile device users can listen to music or broadcasts via the earphone systems, irrespective of time and place, without disturbing others. A typical earphone system of the related art detects the connection of earphones to a mobile device when the jack plug of the earphones is electrically connected to the jack interface of the mobile device. Typically, a user first fit earphones in their ears and then insert the earphone system to a mobile device that is turned on. However, during the connection of the earphone system to the mobile device in this way, electrical noise is generated and this may cause discomfort and/or annoyance to the user.

In addition, earphone connection detecting systems of the related art typically use a ground contact of the earphone in order to check the electrical contact state. However, this configuration cannot detect, if earphones are in an electrical shorted state, whether the jack plug is inserted into a mobile device.

US 2011/0237131 A1 describes an audio connector having a detection switch for detecting when an audio jack is inserted far enough into the audio connector. GB 2330276 A describes a mobile terminal comprising an earphone jack insertion detection section for detecting whether or not an earphone jack is inserted into an earphone jack inserting part. US 2007/049103 A1 describes a technique for sensing the presence of an accessory plug in a jack of a handheld device. US 2009/061694 A1 describes a water-proof connector structure.

### SUMMARY OF THE INVENTION

It is an aim of certain embodiments of the present invention to address, solve, mitigate or obviate, at least partly, at least one of the problems and/or disadvantages associated with the related art, including the above-mentioned problems and/or disadvantages. Certain embodiments aim to provide at least one of the advantages described below.

Accordingly, certain embodiments of the present invention provide a system that can correctly detect the connection of an earphone to a device (e.g. a mobile device), without generating noise (e.g. audible noise output by the earphone). Certain embodiments of the present invention provide a device (e.g. a mobile device) supporting the earphone connection detecting system.

In accordance with an aspect of the present invention, there is provided a mobile device that supports an earphone connection detecting system, the mobile device comprising: a jack interface comprising a cavity for receiving an earphone jack plug of an earphone system; a dome key, disposed in the cavity, for performing a switching operation by a physical force according to the insertion of the earphone jack plug into the cavity; a detection circuit, electrically connected to the dome key, for generating an electrical signal according to the switching operation of the dome key; and a controller, connected to the detection circuit, for detecting the insertion of the earphone jack plug into the jack interface via the electrical signal; wherein the dome key comprises an isolation layer, and first and second switch electrodes spaced apart from each other by a certain distance and disposed in the isolation layer; wherein the switching operation comprises a state where the first switch electrode is in contact with the second switch electrode.

An exemplary embodiment of the present invention provides a device (e.g. mobile device) for supporting an earphone connection detecting system. The device includes: a jack interface comprising a cavity for receiving an earphone jack plug of an earphone system; a switching device, located in the cavity, for performing a switching operation activated by a physical force (or mechanical change) caused by insertion of the earphone jack plug into the cavity; a detection circuit, electrically connected to the switching device, for causing a change in an electrical signal according to the switching operation of the switching device; and a controller, connected to the detection circuit, for detecting the insertion of the earphone jack plug into the jack interface based on the change in the electrical signal.

Another exemplary embodiment of the present invention provides an earphone system for supporting an earphone connection detecting system. The earphone system includes: an output control unit; and a jack plug connected to the output control unit; wherein the output control unit is configured for outputting audio signals received through the jack plug; and wherein the jack plug is adapted for insertion into a jack interface of a device (e.g. a mobile device), whereby a detection circuit of the mobile device detects a change in an electrical signal resulting from a physical force (or mechanical change) caused by insertion of the earphone jack plug into the jack interface.

Another exemplary embodiment of the present invention provides an earphone connection detecting system. The earphone connection detecting system includes: a device (e.g. mobile device); and an earphone system; wherein the earphone system includes: an output control unit; and a jack plug connected to the output control unit; wherein the output control unit is configured for outputting audio signals received through the jack plug; and wherein the device includes: a jack interface comprising a cavity for receiving the earphone jack plug of the earphone system; a switching device, located in the cavity, for performing a switching operation activated by a physical force (or mechanical change) caused by insertion of the earphone jack plug into the cavity; a detection circuit, electrically connected to the switching device, for causing a change in an electrical signal according to the switching operation of the switching device; and a controller, connected to the detection circuit, for detecting the insertion of the earphone jack plug into the jack interface based on the change in the electrical signal.

Another exemplary embodiment of the present invention provides a method carried out by a system and/or apparatus in accordance with any one of the above-described embodiments.

Another exemplary embodiment of the present invention provides a computer program comprising instructions arranged, when executed, to implement a system, apparatus and/or method in accordance with any one of the above-described aspects. A further exemplary embodiment provides a machine-readable storage storing such a program.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, and features and advantages of certain exemplary embodiments of the present invention, will be more apparent from the following description taken in conjunction with the accompanying drawings, in which:
FIG. 1 illustrates a configuration of an earphone connection detecting system according to an exemplary embodiment of the present invention;
FIG. 2 illustrates a schematic block diagram of a mobile device according to an exemplary embodiment of the present invention;
FIG. 3 illustrates a schematic view showing the configuration of an earphone jack plug and a jack interface of the earphone connection detecting system according to an exemplary embodiment of the present invention, when the earphone jack plug is inserted into the jack interface;
FIG. 4 illustrates a cross-sectional view of a dome key and circuit components related to the key, according to an exemplary embodiment of the present invention; and
FIG. 5 illustrates a schematic view showing the configuration of an earphone jack plug and a jack interface of the earphone connection detecting system according to another exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims. It includes various specific details to assist in that understanding but these are to be regarded as merely exemplary. Accordingly, those of ordinary skill in the art will recognize that various changes and modifications of the embodiments described herein can be made without departing from the scope of the invention.

The same or similar components may be designated by the same or similar reference numerals although they may be illustrated in different drawings. In addition, detailed descriptions of functions, processes, structures and constructions known in the art may be omitted for clarity and conciseness, and to avoid obscuring the subject matter of the present invention.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, it is to be understood that the singular forms "a," "an," and "the" include plural referents unless the context clearly dictates otherwise. Thus, for example, reference to "a component surface" includes reference to one or more of such surfaces.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

Although the drawings represent embodiments of the invention, the drawings are not necessarily to scale and certain features may be exaggerated or omitted in order to better illustrate and explain the invention. It should be understood that the invention is not limited to the drawing scale.

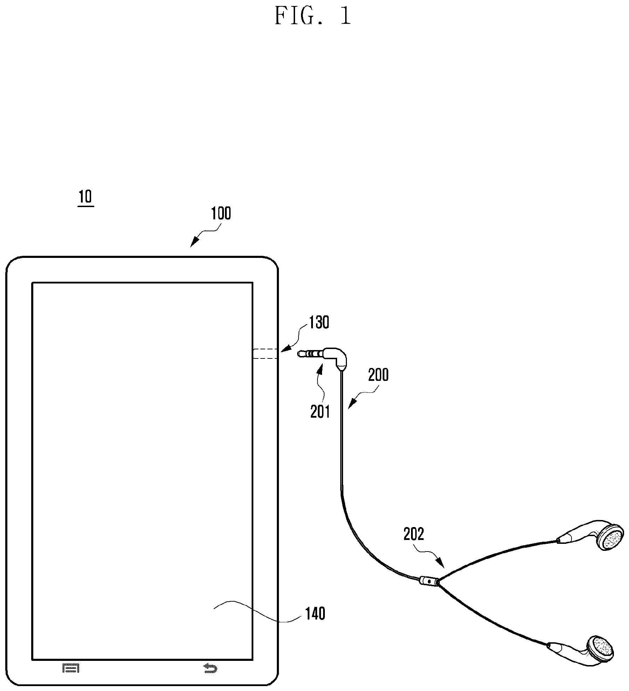

FIG. 1 illustrates a configuration of an earphone connection detecting system according to an exemplary embodiment of the present invention.

Referring to FIG. 1, the earphone connection detecting system 10 includes a mobile device 100 and an earphone system 200.

The earphone system 200 includes an earphone jack plug 201, which may be inserted into a jack interface 130 of the mobile device 100, and an earphone output unit 202, connected to the earphone jack plug 201, for outputting audio signals. The earphone jack plug 201 may include, for example, three or four contacts according to types of earphone systems. For example, the earphone jack plug 201 may be configured to include a left contact for the left earphone, a right contact for the right earphone, and a ground contact. In addition to these three contacts, the earphone jack plug 201 may further include a microphone contact if the earphone system 200 is implemented with a microphone or headset. The earphone output unit 202 includes an earphone left head, connected to the earphone left contact, for outputting a left audio signal, and an earphone right head, connected to the earphone right contact, for outputting a right audio signal. The earphone output unit 202 outputs, if the audio signal is a stereo audio signal, the right and left audio signals via the right and left heads respectively. Alternatively, if the audio signal is a mono audio signal, the earphone output unit 202 outputs the same mono audio signal to the right and left heads.

When the earphone system 200 connects to the mobile device 100, the earphone jack plug 201 is fitted (i.e. inserted) into the jack interface 130. During the insertion process, the earphone jack plug 201 applies a force to a dome key installed in the mobile device 100. The dome key generates an electrical signal according to the magnitude of the received force that is used to detect whether the earphone system 200 is connected to the mobile device 100.

Since the jack interface 130 of the mobile device 100 is electrically isolated from the earphone jack plug 201 of the earphone system 200, the earphone connection detecting system 10 can prevent noise that may be generated by the electrical change during the connection between the earphone jack plug 201 and the jack interface 130. In particular, since the mobile device 100 includes a circuit that connects to the dome key, the mobile device 100 can process (e.g. convert) a mechanical change caused by connection of the earphone jack plug 201 into the mobile device 100 to an electrical change (e.g. change in an electrical signal), and thus correctly detect the insertion of the earphone jack plug 201 to the jack interface 130 of the mobile device 100, irrespective of the state of the earphone jack plug 201.

Although the exemplary embodiment described above is implemented in such a way that the dome key is installed in the jack interface 130 of the mobile device 100 in order to detect the connection of the earphone system 200 to the mobile device 100, it should be understood that certain other exemplary embodiments are not limited thereto. That is, it should be understood that the dome key is one example of types of switching devices that may be installed in the jack interface 130 of the mobile device 100. Suitable switching devices are configured such that their outer sides are electrically isolated from the other components, and are configured to convert a mechanical change to an electrical signal when the earphone jack plug 201 is inserted to the jack interface 130. Accordingly, the earphone connection detecting system 10 can detect the connection without causing electrical shorting when the earphone system 200 is connected to the mobile device 100. In the following description, an exemplary embodiment will be described employing a dome key as an example of the types of isolated switching devices that may be used.

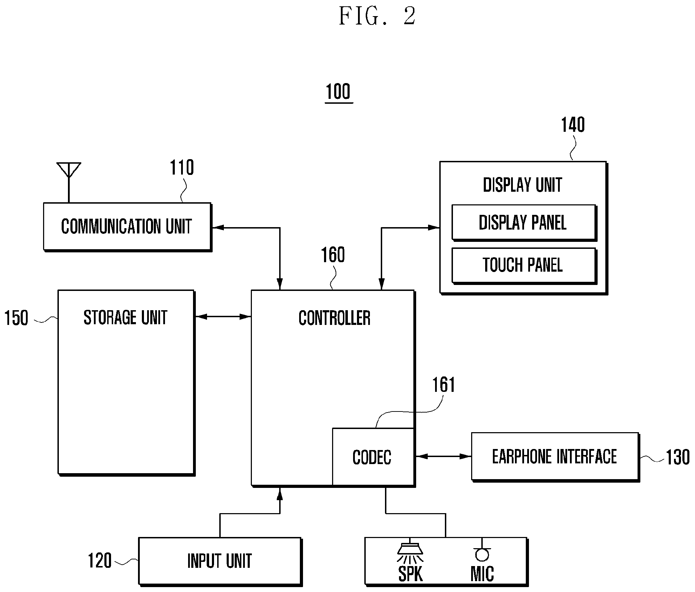

FIG. 2 illustrates a schematic block diagram of a mobile device according to an exemplary embodiment of the present invention.

Referring to FIG. 2, the mobile device 100 includes a communication unit 110, an input unit 120, a jack or earphone interface 130, a display unit 140, a storage unit 150, and a controller 160.

When the earphone jack plug 201 of the earphone system 200 is inserted into the jack or earphone interface 130 of the mobile device 100, applying a force to the dome key installed in the jack interface 130, the mobile device 100 can detect the mechanical change, according to the insertion of the earphone jack plug 201, as an electrical change. To this end, the mobile device 100 includes a circuit for detecting an electrical change corresponding to a mechanical change according to the insertion of the earphone jack plug 201 into the jack interface 130. The circuit may be installed at one side of the dome key. When the circuit detects an electrical change, the mobile device 100 identifies the insertion of the earphone jack plug 201 into the jack interface 130. After that, the mobile device 100 may process signals to control the earphone system 200. As such, since the mobile device 100 can detect, via the circuit, an electrical change according to the insertion of the earphone jack plug 201 into the jack interface 130, the mobile device 100 can identify the connection of the earphone system 200 thereto, irrespective of the electrical characteristics of the earphone system 200. Alternatively, the mobile device 100 may detect the insertion of the earphone jack plug 201 into the jack interface 130, by using the change in the level of physical pressure according to the insertion of the earphone jack plug 201 into the jack interface 130, and this can prevent noise from being generated.

The communication unit 110 performs communication in the mobile device 100. In certain exemplary embodiments, if the mobile device 100 does not support a communication function, the mobile device 100 may not include the communication unit 110. The communication unit 110 may be implemented with a module for providing a mobile communication function to the mobile device 100. The communication unit 110 establishes communication channels with mobile communication systems and transmits/receives signals thereto/therefrom. For example, the communication unit 110 may establish at least one channel for voice, video and data exchange with other mobile communication systems, and transmit/receive signals via the at least one channel.

The communication unit 110 may establish a communication channel with an external server or other mobile device, and receive audio signals therefrom. The mobile device 100 may transmit the audio signals, received via the communication unit 110, to the earphone system 200 according to settings. For example, if the mobile device 100 is connected to a music service server via a communication channel of the communication unit 110, the mobile device 100 may receive audio signals and transmit them to the earphone system 200 via the jack interface 130 according to the control of the controller 160.

The input unit 120 generates signals required for the operation of the mobile device 100. The input unit 120 may be implemented with a keyboard, a keypad, key buttons, etc. according to the compatibility of the mobile device 100. If the display unit 140 is implemented with a touch screen, the input unit 120 may be a touch map displayed thereon. The input unit 120 generates a signal for controlling the path for outputting audio signals, according to the insertion of the earphone jack plug 201 to the jack interface 130 of the mobile device 100. For example, if the earphone jack plug 201 of the earphone system 200 is inserted to the jack interface 130 of the mobile device 100, the input unit 120 may generate, according to the user's selection, a signal for selecting one of the modes where the audio signal is output via the earphone system 200 (i.e., earphone output mode) and via the loudspeakers (i.e., speaker output mode). The earphone output mode may be enabled when the earphone jack plug 201 is inserted into the jack interface 130, and disabled if the earphone jack plug 201 is not inserted thereto.

The jack interface 130 receives the earphone jack plug 201 of the earphone system 200. The jack interface 130 refers to a connector for afixing the inserted earphone jack plug 201. The jack interface 130 includes a number of contacts that contact corresponding contacts of the earphone jack plug 201. The jack interface 130 further includes a dome key that can detect the mechanical change, created during the insertion of the earphone jack plug 201 into the jack interface 130, that is converted to an electrical change. A detailed description of the jack interface 130 will be provided later, referring to the accompanying drawings.

The display unit 140 provides screen interfaces required for the operation of the mobile device 100, for example, an idle screen, menu screens, etc. In particular, the display unit 140 supports a variety of screen interfaces related to the operation of the earphone system 200. For example, if the earphone jack plug 201 of the earphone system 200 is inserted into the jack interface 130, the display unit 140 may display a text message or an image informing the user of the insertion of the earphone jack plug 201 into the jack interface 130 on the screen. Alternatively, the display unit 140 may display the text message or image on the screen while the earphone jack plug 201 is being inserted into the jack interface 130 or may display temporarily the text message or image on the screen when the earphone jack plug 201 is inserted into the jack interface 130. In addition, when the earphone jack plug 201 is removed from the jack interface 130, the display unit 140 may display a text message or image informing the user of the removal of the earphone jack plug 201 on the screen for a certain period of time.

The display unit 140 displays a control map for controlling the audio signal output path of the earphone system 200. The control map includes a key map for selecting one of the output paths of audio signals from the mobile device 100 to the speaker and from the mobile device 100 or to the earphone system 200 via the jack interface 130 and the earphone jack plug 201. To this end, the display unit 140 may be implemented with a touch screen with a display panel and a touch panel. In that case, the display panel may display the image corresponding to the control map, etc. The touch panel may set a touch effective area and a non-touch effective area in order to control the control map displayed on the display panel, and transfer a signal corresponding to a touch event that occurs on the touch effective area to the controller 160.

The speaker outputs audio signals generated, for example when the mobile device 100 plays back audio files and is operated. If the mobile device 100 supports a communication function and a function for transmitting the user's voice, the mobile device 100 may further include a microphone. In particular, if the mobile device 100 connects to the earphone system 200, the speaker may not output audio signals. When the earphone jack plug 201 of the earphone system 200 is removed from the jack interface 130 of the mobile device 100, the speaker may output the audio signals under the control of the controller 160.

The storage unit 150 stores an operating system of the mobile device 100, and application programs for executing functions and related algorithms, according to various exemplary embodiments. The storage unit 150 also stores audio files corresponding to audio data that will be output to the speaker and the earphone system 200. When the audio files are played back according to the user's request, the audio signals are output to the speaker or the earphone system 200 if the earphone system 200 is connected to the mobile device 100.

The controller 160 controls signals flow between the components in the mobile device 100. The controller 160 controls the transmission, process, deletion, and correction with respect to information.

The controller 160 may include a port for detecting the connection of the earphone system 200 to the mobile device 100, via the dome key that coverts a mechanical change to an electrical change according to the insertion of the earphone jack plug 201 into the jack interface 130. The detection port may include a signal line connected to the circuit connected to the dome key. The controller 160 may detect, via the detection port, a signal corresponding to the electrical change generated when the dome key is pressed according to the insertion of the earphone jack plug 201 to the jack interface 130. In that case, the controller 160 may output signals to the earphone system 200. That is, if the controller 160 identifies the insertion of the earphone jack plug 201 into the jack interface 130, the controller 160 may output audio signals to the earphone system 200, via the ports connected to the right and left contacts of the earphone jack plug 201 respectively. To this end, the controller 160 includes a coder and decoder (CODEC) 161. The CODEC 161 includes a detection port, and right and left ports. The jack interface 130 of the mobile device 100 and the earphone jack plug 201 of the earphone system 200 will be described in detail as follows, referring to the accompanying drawings.

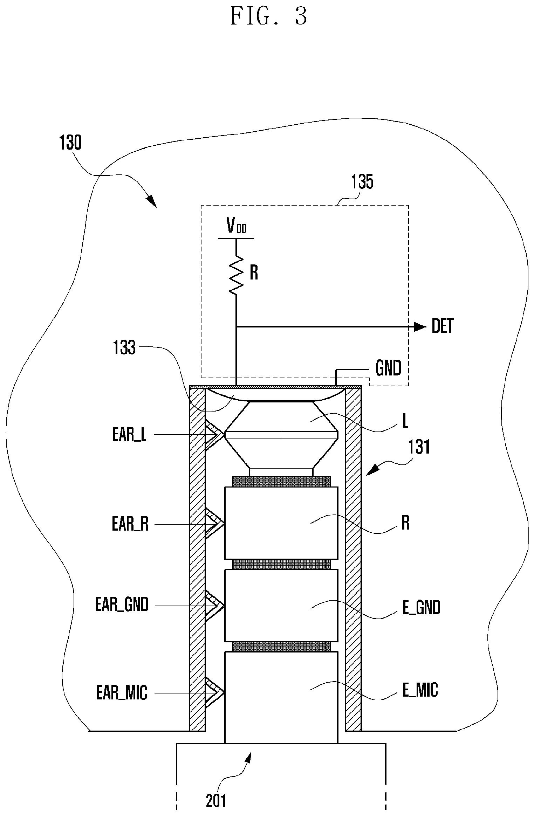

FIG. 3 illustrates a schematic view showing the configuration of an earphone jack plug and a jack interface of the earphone connection detecting system according to an exemplary embodiment of the present invention, when the earphone jack plug is inserted into the jack interface.

Referring to FIG. 3, the earphone jack plug 201 has left L and right R audio signal plug contacts, a ground plug contact E_GND, and a microphone plug contact E_MIC, in sequential order, from the tip of the earphone jack plug 201. The contacts of the jack plug 201 are electrically isolated from each other via isolation members or rings. In the exemplary embodiment described above, although the earphone jack plug 201 inserted into the jack interface 130 includes four contacts, it should be understood that certain other exemplary embodiments are not limited thereto. For example, the earphone jack plug 201 may be modified in such a way to include three contacts, left L and right R audio signal plug contacts, and a ground plug contact E_GND, without the microphone plug contact E_MIC. Furthermore, the earphone jack plug 201 may also be modified in such a way that the position of the ground plug contact E_GND of the contacts (e.g. four contacts) is exchanged with that of the another plug contact. The earphone jack plug 201 inserted into the jack interface 130 of the mobile device 100, according to various exemplary embodiments, can be part of any suitable earphone system, including conventional earphone systems. In the following description, the exemplary embodiment will be described based on the earphone jack plug 201 with four plug contacts as shown in FIG. 3.

The jack interface 130 of the mobile device 100 is designed to have a cavity 131 that is shaped or formed (e.g. as an elongate cavity) so as to receive the earphone jack plug 201. Jack contacts are formed on the inner wall of the cavity 131 at locations such that the jack contacts contact the contacts of the jack plug 201. For example, the cavity 131 includes a left audio signal jack contact EAR_L that contacts the left audio signal plug contact L, a right audio signal jack contact EAR_R that contacts the right audio signal plug contact R, a ground jack contact EAR_GND that contacts the ground plug contact E_GND, and a microphone jack contact EAR_MIC that contacts the microphone plug contact E_MIC. In certain exemplary embodiments, the jack interface 130 is designed in such a way that the dome key 133 is formed at the end, or at the top/bottom, of the jack interface 130 (e.g. at the closed end of the inside of the cavity 131, opposite the open end of the cavity), and the detection circuit 135 is placed near the dome key 133, so that the dome key 133 is mechanically pressed by the tip of the earphone jack plug 201, and the detection circuit 135 converts the mechanical change of the dome key 133 to an electrical signal and transfers the electrical signal to the controller 160.

In this embodiment, when the earphone jack plug 201 of the earphone system 200 is inserted into the jack interface 130 of the mobile device 100, the tip of the jack plug 201 presses the dome key 133 of the cavity 131, thereby generating a mechanical deformation of the dome key 133, that is transferred to a switching circuit in the dome key 133. In that case, the detection circuit 135 connected to the switching circuit converts the mechanical change of the dome key 133 to the electrical change and transfers the corresponding signal to the controller 160.
The jack interface 130 is designed in such a way that the earphone jack plug 201 is fitted into the cavity 131 so that the earphone jack plug 201 cannot be easily removed therefrom. For example, if the cavity 131 of the interface 130 has the inner diameter of 3.5 mm, the jack plug 201 has also the same size in the external diameter. The jack interface 130 may also be designed in such a way that the internal wall of the cavity 131 is made of an elastic material to hold the earphone jack plug 201 inserted therein. In that case, the jack contacts of the interface 130 may protrude from the inner wall of the cavity 131 so that the contacts can correctly contact the plug contacts of the earphone jack plug 201.

In certain exemplary embodiments, the jack interface 130 is designed in such a way that the cavity 131 has a depth so that the dome key 133 of the jack interface 130, placed on the bottom or at the deepest location inside the cavity 131 of the jack interface 130, can be pressed by the jack plug 201 when the earphone jack plug 201 is completely fitted into the cavity 131, and is physically deformed by the mechanical pressure. For example, the cavity 131 may be formed to have a depth such that the depth (e.g. distance) between the top of the dome key 133, when the dome key 133 does not receive an external force, and the opening of the cavity 131 is less than the length of the entire contact of the jack plug 201, and the depth (e.g. distance) between the top of the dome key 133, when the dome key 133 receives an external force by the jack plug 201, and the opening of the cavity 131 is similar to the length of the entire contact of the jack plug 201.

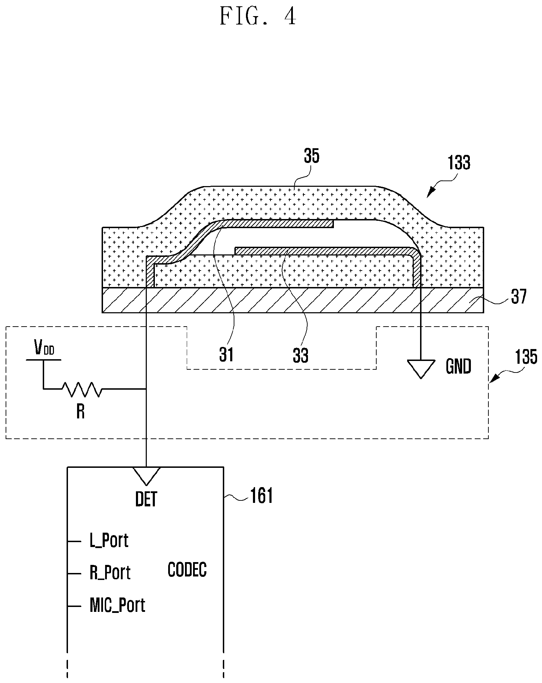

FIG. 4 illustrates a cross-sectional view of a dome key and circuit components related to the key, according to an exemplary embodiment of the present invention.

Referring to FIG. 4, the dome key 133 includes a first switch electrode 31, a second switch electrode 33, an isolation layer 35, and an adhesive layer 37. The adhesive layer 37 may be implemented with a variety of fixing members for fixing the dome key 133 to the bottom of the jack interface 130. For example, the fixing members may be screws. In certain exemplary embodiments, the dome key 133 is designed in such a way that both sides of the dome key 133 are equipped with hooks, and in these embodiments, the adhesive layer 37 may include members to be coupled with the hooks. The adhesive layer 37 may fix the dome key 133 to the bottom of the jack interface 130.

In certain exemplary embodiments, the detection circuit 135 may be configured in such a way that a pull-up resistor R is connected to a node on a wire connecting the first switch electrode 31 and the detection port DET of the CODEC 161, a reference voltage source VDD outputs a certain level of voltage via the pull-up resistor R, and the ground electrode GND connects to the second switch electrode 33.

The dome key 133 may be configured in such a way that the first switch electrode 31 and the second switch electrode 33 are spaced apart from each other by a certain distance. However, other exemplary embodiments are not limited thereto, and other types of switching mechanisms may be used. The dome key 133 may be placed in the isolation layer 35. If the isolation layer 35 experiences an external force, the first switch electrode 31 contacts the second switch electrode 33. In that case, since the first 31 and second 33 electrodes are grounded to the ground electrode GND, the node connecting the pull-up resistor R and the detection port DET goes to ground. Therefore, the CODEC 161 receives a signal corresponding to the electrical change via the detection port DET. That is, the CODEC 161 detects the change in the input voltage level of the detection port DET from the voltage level of VDD to the ground level. As such, the CODEC 161 can identify the insertion of the earphone jack plug 201 into the jack interface 130 by detecting the input voltage level at the detection port DET.

Meanwhile, since the first 31 and second 33 switch electrodes of the dome key 133 are covered with the isolation layer 35 and electrically isolated from the outside, the first 31 and second 33 switch electrodes do not contact the earphone jack plug 201 when the plug 201 applies a physical force to the dome key 133. Therefore, when the dome key 133 experiences a physical force, the detection circuit 135 generates an electrical change corresponding to the physical force, and the CODEC 161 thus identifies the insertion of the earphone jack plug 201 to the jack interface 130 irrespective of the electrical state of the earphone system 200. If the earphone jack plug 201 is inserted into the jack interface 130, the CODEC 161 enables the left audio signal port L_Port, the right audio signal port R_Port, and a microphone signal port MIC_Port to transmit/receive signals to/from the left audio signal jack contact EAR_L, the right audio signal jack contact EAR_R, and the microphone jack contact EAR_MIC of the jack interface 130, via signal lines.

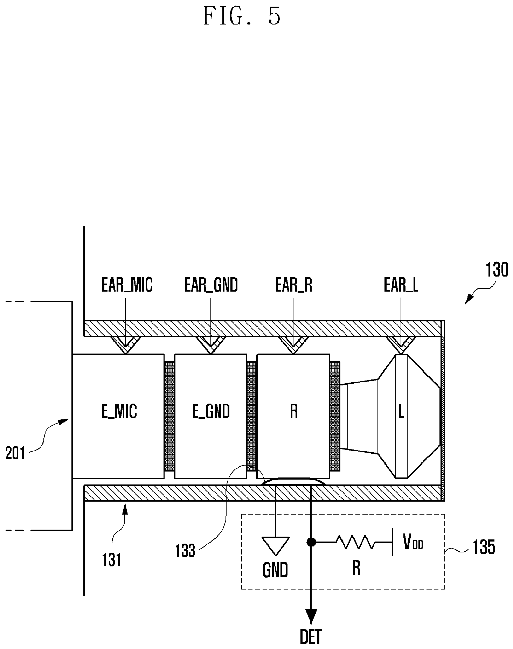

FIG. 5 illustrates a schematic view showing the configuration of an earphone jack plug and a jack interface of the earphone connection detecting system according to another exemplary embodiment of the present invention.

Referring to FIG. 5, the jack interface 130 of the mobile device 100 is formed with a dome key 133 on the inner wall. The earphone jack plug 201 includes four contacts, i.e., left L and right R audio signal plug contacts, a ground plug contact E_GND, and a microphone plug contact E_MIC, in that sequential order, from the tip. However, it is noted that this order of the contacts is merely an example and the contacts may be arranged in a different order.

The jack interface 130 includes a cavity 131, a dome key 133 formed on the inner wall of the cavity 131, and a number of contacts on the inner wall of the cavity 131. The cavity 131 is sufficiently long so as to receive the earphone jack plug 201. The contacts include a left audio signal jack contact EAR_L that contacts the left audio signal plug contact L, a right audio signal jack contact EAR_R that contacts the right audio signal plug contact R, a ground jack contact EAR_GND that contacts the ground plug contact E GND, and a microphone jack contact EAR_MIC that contacts the microphone plug contact E_MIC. The cavity 131 of the interface 130 has an inner diameter similar to the external diameter of the earphone jack plug 201, for example, 3.5 mm. The inner wall of the cavity 131 may be made of a material with elasticity and high frictional coefficient, non-conductivity, e.g., rubber, synthetic rubber, polyurethane, etc., so that the earphone jack plug 201 fitted into the cavity 131 cannot be easily removed therefrom.

Referring to FIG. 5, the jack interface 130 may include at least one dome key 133 on the inner wall of the cavity 131. The dome key 133 contacts the side of the earphone jack plug 201 and experiences a physical force according to the insertion of the plug 201 into the cavity of the jack interface 130. In that case, the dome key 133 converts the physical force to an electrical change or signal and transfers the signal to the CODEC 161.

Referring to FIG. 4, since the first 31 and second 33 switch electrodes of the dome key 133 are covered with the isolation layer 35 and electrically isolated from the outside, the first 31 and second 33 switch electrodes do not contact the earphone jack plug 201 when the plug 201 applies a physical force to the dome key 133. That is, the dome key 133 can convert the physical force to an electrical signal without electrically contacting the earphone jack plug 201.

Although the exemplary embodiment described above is implemented in such a way that the dome key 133 is formed on the inner wall at a place corresponding to a position of the right audio signal plug contact R of the earphone jack plug 201, it should be understood that other exemplary embodiments are not limited thereto. For example, the dome key 133 may be formed on the inner wall at a place corresponding to a position of any one of the other contacts of the earphone jack plug 201, e.g., the left audio signal plug contact L, the ground plug contact E_GND, and the microphone plug contact E_MIC. Meanwhile, exemplary embodiments may be modified in such a way that the jack interface 130 may be formed with a number of dome keys on the inner wall. This configuration is advantageous in that, if one of a number of dome keys becomes broken, the remaining dome keys can convert the physical force to an electrical change and transfer the corresponding signal to the detection circuit, so that the connection detection system can identify the insertion of the earphone jack plug 201 to the jack interface 130.

As described above, the earphone connection detecting system and the mobile device supporting the system, according to the exemplary embodiments, can correctly detect the connection of an earphone to the mobile device, without generating noise.

Although it is not shown in the drawings, the mobile device may selectively further include various types of components, for example: a short-range communication module for short-range communication; a camera module for acquiring still images/videos; an interface for transmitting/receiving data in a wireless or wired mode; an Internet communication module; and a digital broadcast module for receiving and reproducing broadcasts. With the spread of digital convergence, although it is impossible to list all the modifications of mobile devices in this description, it will be easily appreciated to those skilled in the art that the other components equivalent to the above-listed components may be further included in the mobile device according to the invention. Also, it will be appreciated that, according to the purposes, the mobile device may be implemented by omitting a particular component or replacing it with other components. Mobile devices according to various exemplary embodiments may include various types of information communication device, multimedia devices, and their applications. Mobile devices according to various embodiments may include an earphone interface for various types of jacks for earphones that are plugged into the interface and operated according to communication protocols corresponding to various types of communication systems. For example, the mobile device may be in the form of a mobile communication terminal, Portable Multimedia Player (PMP), digital broadcast player, Personal Digital Assistant (PDA), audio player (e.g., MP3 player), mobile game player, smartphone, laptop computer, hand-held PC, etc.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like.

It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

While the invention has been shown and described with reference to certain exemplary embodiments thereof, it will be understood by those skilled in the art that various changes in form and details may be made therein without departing from the scope of the invention as defined by the appended claims.

## Claims

1. A mobile device (100) that supports an earphone connection detecting system (10), the mobile device (100) comprising:
a jack interface (130) comprising a cavity (131) for receiving an earphone jack plug (201) of an earphone system (200);
a dome key (133), disposed in the cavity (131), for performing a switching operation by a physical force according to the insertion of the earphone jack plug (201) into the cavity (131);
a detection circuit (135), electrically connected to the dome key (133), for generating an electrical signal according to the switching operation of the dome key (131); and
a controller (160), connected to the detection circuit (135), for detecting the insertion of the earphone jack plug (201) into the jack interface (130) via the electrical signal;
wherein the dome key (133) comprises an isolation layer (35), and first (31) and second (33) switch electrodes spaced apart from each other by a certain distance and disposed in the isolation layer (35);
wherein the switching operation comprises a state where the first switch electrode (31) is in contact with the second switch electrode (33).

2. The mobile device of claim 1, further comprising:
a member for fixing the dome key (133) into the cavity (131) of the jack interface (130).

3. The mobile device of claim 1 or 2, wherein the detection circuit (135) comprises:
a pull-up resistor connected to the first switch electrode (31);
a reference voltage source connected to the pull-up resistor;
a ground electrode connected to the second switch electrode (33); and
a signal line connecting the pull-up resistor and the controller (160).

4. The mobile device of claim 1, 2 or 3, wherein the dome key (133) is disposed on a bottom of the cavity (131) of the jack interface (130) and arranged so as to contact a tip of the earphone jack plug (201) when the earphone jack plug (201) is inserted into the cavity (131).

5. The mobile device of any of claims 1 to 4, wherein the dome key (133) is disposed on an inner wall of the jack interface (130) at one or more places corresponding to positions of contacts of the earphone jack plug (201) when the earphone jack plug (201) is inserted into the cavity (131).

6. An earphone connection detection system (10) comprising:
a mobile device (100) according to any one of claims 1 to 5; and
an earphone system (200) comprising an output control unit (202) and an earphone jack plug (201) connected to the output control unit (202), wherein the output control unit (202) outputs audio signals to the earphone jack plug (201).

## Patentansprüche

1. Mobile Vorrichtung (100), die ein Kopfhöreranschlusserkennungssystem (10) unterstützt, wobei die mobile Vorrichtung (100) umfasst:
Eine Buchsenschnittstelle (130), die einen Hohlraum (131) zur Aufnahme eines Kopfhörerbananensteckers (201) eines Kopfhörersystems (200) umfasst;
eine Domtaste (133), die im Hohlraum (131) angeordnet ist, um einen Schaltvorgang durch eine physikalische Kraft, gemäß dem Einschub des Kopfhörerbananensteckers (201) in den Hohlraum (131), auszuführen;
einen Erkennungsschaltkreis (135), der mit der Domtaste (133) elektrisch verbunden ist, um ein elektrisches Signal gemäß dem Schaltvorgang der Domtaste (131) zu erzeugen; und
einen Controller (160), der an den Erkennungsschaltkreis (135) angeschlossen ist, um den Einschub des Kopfhörerbananensteckers (201) in die Buchsenschnittstelle (130) über das elektrische Signal zu erkennen;
wobei die Domtaste (133) eine Isolierschicht (35) und erste (31) und zweite (33) Schaltelektroden umfasst, die voneinander durch eine gewisse Distanz beabstandet und in der Isolierschicht (35) angeordnet sind;
wobei der Schaltvorgang einen Zustand umfasst, wo die erste Schaltelektrode (31) mit der zweiten Schaltelektrode (33) in Kontakt ist.

2. Mobile Vorrichtung nach Anspruch 1, ferner umfassend:
Ein Element zum Befestigen der Domtaste (133) in den Hohlraum (131) der Buchsenschnittstelle (130).

3. Mobile Vorrichtung nach Anspruch 1 oder 2, wobei der Erkennungsschaltreis (135) umfasst:
Einen Pull-up-Widerstand, der mit der ersten Schaltelektrode (31) verbunden ist;
eine Referenzspannungsquelle, die mit dem Pull-up-Widerstand verbunden ist;
eine Erdelektrode, die mit der zweiten Schaltelektrode (33) verbunden ist; und
eine Signalleitung, die den Pull-up-Widerstand und den Controller (160) verbindet.

4. Mobile Vorrichtung nach Anspruch 1, 2 oder 3, wobei die Domtaste (133) auf einem Boden des Hohlraums (131) der Buchsenschnittstelle (130) angeordnet ist und eingerichtet ist, eine Spitze des Kopfhörerbananensteckers (201) zu kontaktieren, wenn der Kopfhörerbananenstecker (201) in den Hohlraum (131) eingeschoben wird.

5. Mobile Vorrichtung nach einem der Ansprüche 1 bis 4, wobei die Domtaste (133) auf einer Innenwand der Buchsenschnittstelle (130) an einer oder mehreren Stellen angeordnet ist, die Positionen von Kontakten des Kopfhörerbananensteckers (201) entsprechen, wenn der Kopfhörerbananenstecker (201) in den Hohlraum (131) eingeschoben wird.

6. Kopfhöreranschlusserkennungssystem (10), umfassend:
Eine mobile Vorrichtung (100) nach einem der Ansprüche 1 bis 5; und
ein Kopfhörersystem (200), das eine Ausgangs-Steuereinheit (202) und einen Kopfhörerbananenstecker (201) umfasst, der mit der Ausgangs-Steuereinheit (202) verbunden ist, wobei die Ausgangs-Steuereinheit (202) Ausgangssignale zum Kopfhörerbananenstecker (201) ausgibt.

## Revendications

1. Un dispositif mobile (100) qui prend en charge un système de détection de connexion d'écouteur (10), le dispositif mobile (100) comprenant :
une interface de prise mâle (130) comprenant une cavité (131) destinée à la réception d'un connecteur de prise mâle d'écouteur (201) d'un système d'écouteur (200),
une touche en forme de dôme (133), disposée dans la cavité (131), destinée à l'exécution d'une opération de commutation par une force physique en fonction de l'insertion du connecteur de prise mâle d'écouteur (201) dans la cavité (131),
un circuit de détection (135), électriquement raccordé à la touche en forme de dôme (133), destiné à la génération d'un signal électrique en fonction de l'opération de commutation de la touche en forme de dôme (131), et
un dispositif de commande (160), raccordé au circuit de détection (135), destiné à la détection de l'insertion du connecteur de prise mâle d'écouteur (201) dans l'interface de prise mâle (130) par l'intermédiaire du signal électrique,
où la touche en forme de dôme (133) comprend une couche d'isolation (35) et une première (31) et une deuxième (33) électrodes de commutation espacées l'une de l'autre d'une distance donnée et disposées dans la couche d'isolation (35),
où l'opération de commutation comprend un état dans lequel la première électrode de commutation (31) est en contact avec la deuxième électrode de commutation (33).

2. Le dispositif mobile selon la Revendication 1, comprenant en outre :
un élément destiné à la fixation de la touche en forme de dôme (133) dans la cavité (131) de l'interface de prise mâle (130).

3. Le dispositif mobile selon la Revendication 1 ou 2, où le circuit de détection (135) comprend :
une résistance de rappel à la source raccordée à la première électrode de commutation (31),
une source de tension de référence raccordée à la résistance de rappel à la source,
une électrode de masse raccordée à la deuxième électrode de commutation (33), et
une ligne de signal raccordant la résistance de rappel à la source et le dispositif de commande (160).

4. Le dispositif mobile selon la Revendication 1, 2 ou 3, où la touche en forme de dôme (133) est disposée sur une partie inférieure de la cavité (131) de l'interface de prise mâle (130) et agencée de façon à entrer en contact avec une pointe du connecteur de prise mâle d'écouteur (201) lorsque le connecteur de prise mâle d'écouteur (201) est inséré dans la cavité (131).

5. Le dispositif mobile selon l'une quelconque des Revendications 1 à 4, où la touche en forme de dôme (133) est disposée sur une paroi intérieure de l'interface de prise mâle (130) à un ou plusieurs points correspondant à des positions de contact du connecteur de prise mâle d'écouteur (201) lorsque le connecteur de prise mâle d'écouteur (201) est inséré dans la cavité (131).

6. Un système de détection de connexion d'écouteur (10) comprenant :
un dispositif mobile (100) selon l'une quelconque des Revendications 1 à 5, et
un système d'écouteur (200) comprenant une unité de commande de sortie (202) et un connecteur de prise mâle d'écouteur (201) raccordé à l'unité de commande de sortie (202), où l'unité de commande de sortie (202) produit en sortie des signaux audio vers le connecteur de prise mâle d'écouteur (201).
